# EUROPÄISCHE PATENTSCHRIFT

(11) **EP 1 407 157 B1**
(45) Veröffentlichungstag und Bekanntmachung des Hinweises auf die Patenterteilung: **09.03.2005**
(21) Anmeldenummer: 02754174.7
(22) Anmeldetag: 29.05.2002
(51) Int. Cl.: F16C 33/04, F16C 33/16

(54) **GLEITPAARUNG MIT EINEM AUF DER BASIS VON KOHLENSTOFF HERGESTELLTEN GLEITELEMENT**
SYSTEM OF SLIDING SURFACES COMPRISING ONE CARBON-BASED SLIDING ELEMENT
SYSTEME DE SURFACES DE GLISSEMENT COMPORTANT UN ELEMENT DE GLISSEMENT A BASE DE CARBONE

(30) Priorität: 18.07.2001 DE 10135477
(43) Veröffentlichungstag der Anmeldung: 14.04.2004
(73) Patentinhaber: Tea GmbH, 10587 Berlin (DE)
(72) Erfinder: WOYDT, Mathias, 12203 Berlin (DE); KLEEMANN, Jens, 12355 Berlin (DE)
(74) Vertreter: Bürger, Peter
(86) Internationale Anmeldenummer: PCT/DE2002/001969
(87) Internationale Veröffentlichungsnummer: WO 2003/008821

## Beschreibung

Die Erfindung betrifft Gleitpaarungen mit einem auf der Basis von Kohlenstoff hergestellten Gleitelement gemäß dem Oberbegriff des Hauptanspruches.

Gleitpaarungen gemäß dem Oberbegriff sind allgemein vorbekannt mit einem ersten auf der Basis von Kohlenstoff hergestellten Gleitelement und einem zweiten Gleitelement, das vorzugsweise das thermische Ausdehnungsverhalten von Kohlenstoff aufweist, jedoch seine Gleitfläche für das erste Gleitelement durch eine andere Materialzusammensetzung, vorzugsweise ohne Kohle, gebildet wird. Derartige Paarungen bestehen nach DIN 50320 aus einem ersten Gleitelement mit 100% Eingriffsverhältnis (Grundkörper) und einem zweiten Gleitelement mit weniger als 100% Eingriffsverhältnis (Gegenkörper).
Die Trockenlauffähigkeit derartiger Paarungen wird durch die Ausbildung eines Transferfilmes des Grundkörpers auf dem Gegenkörper erreicht. Hierzu sind polymere Werkstoffe, extrinsische und intrinsische Festschmierstoffe sowie weiche Metalle - In, Pb, Au, Ag, Sn - geeignet.
Für das erste Gleitelement bieten unterschiedliche Graphitformen die Möglichkeit, den Mechanismus der Transferfilmschmierung zu gestalten. Es können Mesophasen aus erdöl- oder kohlestämmigen Pechen, Kohlegraphite, Hartbrandkohlen, Elektrographite, Halbkoks- oder Mesophasenpulver mit selbstsintemden Eigenschaften oder Kunstkohle eingesetzt werden.
Nach gängiger Auffassung bilden sich bei Gleitpaarungen mit einem aus Kohlenstoff bestehenden Gleitpartner beim Gleiten auf dem anderen Gleitpartner eine Kohlenstoffschicht durch Adhäsion oder Affinität bzw. durch ein Auf- und Einreiben auf der Oberfläche aus. Im eingelaufenen Zustand der Gleitpartner läuft quasi Kohlenstoff auf Kohlenstoff. Die vorbeschriebenen Gleitpaarungen sind auch für durch Wasserdampf mit hohem Druck- und Temperatumiveau beaufschlagte Maschinenteile, vorzugsweise für Kolben-Zylinder-Anordnungen von Dampfmotoren, geeignet, wenn antimonimprägnierte Kohlenstoffe eingesetzt werden.

US 5 711 613 A offenbart ebenfalls Gleitpaarungen mit Materialien gemäß dem Oberbegriff des Anspruchs 1, die jedoch in Bädern von flüssigem Zink in Einrichtungen zum Verzinken von Metallbändem eingesetzt werden und deswegen einen konstruktiv andersartigen Aufbau und keine für übliche Lager typischen Betriebsbedingungen aufweisen.

In US 2 602 708 A sind Gleitpaarungen offenbart, bei denen einerseits Teile aus Zirconium Oxid und andererseits aus Borcarbid aneinander gleiten und welche damit Hart-Hart-Paarungen bilden.

Es wurde gefunden, dass die tribologischen Eigenschaften und die Lebensdauer der von Gleitpaarungen mit einem auf der Basis von Kohlenstoff hergestellten. Gleitelement zu verbessern sind, wenn die Bildung eines Transferfilmes aus Kohlenstoff auf dem anderen Gleitelement unterbleibt.

Demgemäss liegt der Erfindung die Aufgabe zugrunde, Gleitpaarungen zu schaffen, bei denen das erste Gleitelement auf der Basis von Kohlenstoff hergestellt ist und auf dem zweiten Gleitelement auch im eingelaufenen Zustand keine Transferschicht aus Kohlenstoff gebildet wurde bzw. vorhanden ist. Derartige Gleitpaarungen sollen auch unter der Atmosphäre von Wasserdampf bei hohen Drücken und hoher Temperatur bzw. Beaufschlagung mit Wasser verschleißarm gleiten.

Diese Aufgabe wird erfindungsgemäß durch Gleitpaarungen gelöst, bei denen das zweite Gleitelement eine Gleitfläche solcher Materialzusammensetzung und Oberflächentopographie aufweist, welche die Bildung einer Transferschicht aus Kohlenstoffmaterial des ersten Gleitelementes verhindert. Adhäsion oder Affinität zwischen den Gleitschichten soll unterbunden werden, sodass sich beim Aufeinandergleiten keine Transferschicht bilden kann. Ein Auf- und Einreiben von Kohlenstoff wird annähernd vollständig unterbunden. Siehe hierzu das Bild mit den Angaben zu den Versuchsbedingungen und den für die Gleitelemente eingesetzten Materialien.
Nachfolgend werden erfindungsgemäße Gleitpaarungen mit ihren spezifischen Zusammensetzungen beschrieben, mit welchen die vorbeschriebenen Eigenschaften erzielt werden können.
Erfindungsgemäß besteht das zweite Gleitelement überwiegend aus Zirkondioxid der monoklinen, tetragonalen und kubischen kristallographischen Phase.
Vorteilhaft kann es auch mit bis zu 20 Gew.-% MgO und/oder mit vorzugsweise 13 - 16 Gew.-% CeO₂ legiert sein.

Das erste Gleitelement aus Kohlenstoff besteht vorteilhaft aus Gruppen der Mesophasen, aus erdöl- oder kohlestämmigen Pechen, Kohlegraphite, Hartbrandkohlen, Elektrographite, Halbkoks- oder Mesophasenpulver mit selbstsinternden Eigenschaften oder Kunstkohle.

Das anhängende Bild zeigt eine erfindungsgemäße Gleitpaarung mit polierter Zirkondioxidoberfläche MgO- ZrO₂ auf dem zweiten Gleitelement in starker Vergrößerung nach einem Trockenlauf mit einem ersten Gleitelement aus Kohlenstoff. Es bildeten sich keine als Gleitschichten wirksame Kohlegraphitflächen in Form von Anlagerungen aus. Dies zeigt ein sehr verschleißarmes Gleitverhalten, bei dem das erste Gleitelement aus Kohlenstoff kaum Substanz verliert und kaum Formveränderungen erfährt.

MgO-ZrO₂ nimmt unter allen getesteten Werkstoffpaarungen unter Wasserdampf in Verbindung mit einem Gleitpartner aus Kohlenstoff mit Antimonimprägnierung eine Sonderstellung ein. Es ergab sich ein äußerst niedriger Verschleißkoeffizient von K_{V}^{0.20.000m}*=* 4,0 10⁻⁸ mm³/Nm mit einer Reibungszahl von nur 0,008 bei T=400°C und 3 m/s bei Flächenpressungen zwischen 1 - 100 MPa/mm². Diese Werte konnten in Widerholungsversuchen bestätigt werden. Sie sind typisch für durch Flüssigkeit geschmierte Tribosysteme im Reibungszustand der Misch- und Grenzreibung.

REM- Aufnahmen zeigten, dass sich quasi keine sichtbare Kohlenstoff-Transferschicht ausbildet. Weitere oberflächenanalytische Untersuchungen (Micro-Laser-Raman-Spektroskopie, Small-Sport-ESCA, Fourier-Transformation-Infrarotspektroskopie, Röntgenbeugung) ergaben, dass sich auf einer ausreichend glatten Zirkonoxidoberfläche adhäsiv keine Kohlegraphitpartikel oder -filme anlagern. Bei Anwesenheit von Wasserdampf kommt es auf der Zirkonoxidoberfläche zur Bildung von Zirkonhydroxid Zr[OH]₄ - (CAS:14475-63-9). Das Gleitelement aus Kohlenstoff gleitet in diesem Falle auf einer tribochemisch gebildeten Schicht aus Zirkonhydroxid, die in Wasser unlöslich ist. Eine Dehydration solcher Schichten beginnt unter Luft bei ca. 600 °C.

Erfindungsgemäß wird eine Oberfläche mit solchen Eigenschaften durch eine Gleitschicht aus einer beliebigen Mischung aus dem Stoffsystem Antimon-Antimonoxid-Zirkonhydroxid gebildet.

Zur Verbesserung der Haftung der Oberflächenschicht ist unter der Gleitschicht vorteilhaft eine Zwischenschicht aus Zirkoniumoxid oder Aluminiumoxid vorhanden.

Bei erfindungsgemäßen Gleitpaarungen entfällt das Einlaufen, d. h. für ordnungsgemäßes Laufverhalten braucht nicht erst eine Transferschicht zwischen den Gleitflächen aufgebaut werden, die durch einen Einlaufverschleiß entsteht.

Auf der vorbeschriebenen Oberfläche aus Zirkonoxid des zweiten Gleitelementes kann sich bei Einsatz eines ersten Gleitelementes aus mit 40 Gew.-% Antimon imprägniertem Kohlenstoff eine Antimonoxidschicht anlagern, welche gutes Reibund Verschleißverhalten aufweist. Dies hat zur Folge, dass die Kohlegraphit-Oberfläche des ersten Gleitelementes nur auf der angelagerten Antimonoxidschicht gleitet.

Beim Einsatz von mit Antimon imprägniertem Kohlegraphit für das erste Gleitelement bildet eine bei Anwesenheit von Wasserdampf entstandene Zirkonhydroxidoberschicht am zweiten Gleitelement beste Voraussetzungen für das Anlagern von Antimonoxid durch ihre OH-Gruppen. Es ergibt sich ein Gleiten unter niedrigstem Verschleiß am Kohlegraphit auf einer tribochemisch gebildeten Schicht aus Zirkonhydroxid bzw. auf einer durch Tribooxidation gebildeten Schicht aus Antimonoxid.
Das zweite Gleitelement kann vorteilhaft aus Aluminiumoxid mit mindestens 80 % Al₂O₃ bestehen, auf dem die Oberfläche aus Zirkonoxid aufgetragen wird. Ebenso kann eine Oberfläche aus einer Mischung von Aluminiumoxid und Zirkondioxid eingesetzt werden.

Bei dieser Ausführung ergibt sich eine hohe Festigkeit des Grundkörpers und eine physikalisch fast gleiches Verhalten von Grundkörper und Oberschicht aus Zirkonoxid.

Das zweite Gleitelement wird vorteilhaft monolithisch hergestellt, wobei seine Beschichtung bzw. Beschichtungen nach den Verfahren des thermischen Spritzens oder dem physikalischen Abscheiden aus der Dampfphasen hergestellt sind.

Die Oberflächen des zweiten Gleitelementes weisen vorteilhaft eine Zirkonhydroxid - Schicht mit einer Schichtdicke kleiner 1000nm, vorzugsweise aber zwischen 10nm< d <50nm, auf.

Vorteilhaft für das Gleitverhalten weisen die Oberflächen des zweiten Gleitelementes Krümmungsradien der Mikrokontakte in der Größe von 5µm< R< 10µm auf.

Vorteilhaft kann es auch sein, die Oberflächen bzw. den Werkstoff des ersten Gleitelementes aus Kohlenstoff mit bis zu 30 Gew.-% Zirkonhydroxid zu imprägnieren.

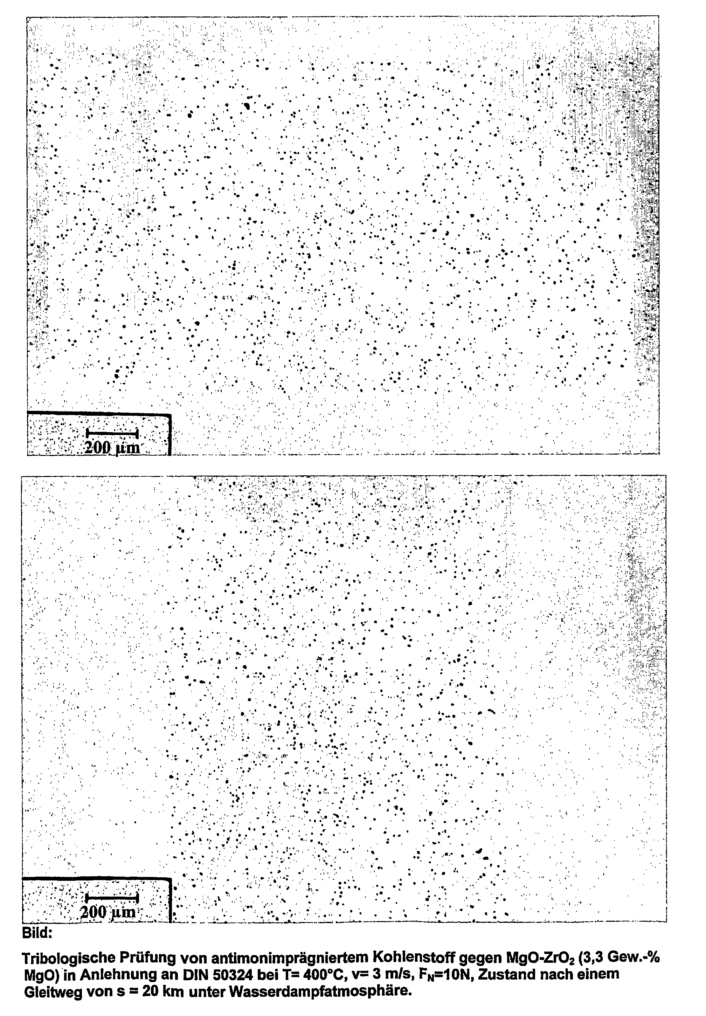

## Patentansprüche

1. Gleitpaarung mit einem auf der Basis von Kohlenstoff hergestellten Gleitelement und einem weiteren, dem thermischen Ausdehnungsverhalten von Kohlenstoff ähnlichem zweiten Gleitelement, welches jedoch eine andere Materialzusammensetzung aufweist,
**dadurch gekennzeichnet,**
**dass** das zweite Gleitelement eine Gleitfläche aus einem Material aufweist, weiches beim Eingriff das Entstehen einer Transferschicht auf der Basis von Kohlenstoff verhindert.

2. Gleitpaarung nach Anspruch1,
**dadurch gekennzeichnet,**
**dass** das zweite Gleitelement überwiegend aus Zirkondioxid der monoklinen, tetragonalen und kubischen kristallographischen Phase besteht.

3. Gleitpaarung nach Anspruch1 und 2,
**dadurch gekennzeichnet,**
**dass** das zweite überwiegend aus Zirkondioxid bestehende Gleitelement mit bis zu 20 Gew.-% MgO und/oder mit 13 -16 Gew.-% CeO₂ legiert ist.

4. Gleitpaarung nach Anspruch 1,
**dadurch gekennzeichnet,**
**dass** das zweite Gleitelement eine Gleitfläche aufweist, die aus einer Schicht aus einer Mischung aus dem Stoffsystem Antimon-Antimonoxid-Zirkonhydroxid besteht und mit dem das auf der Basis von Kohlenstoff hergestellte Gleitelement im Eingriff steht.

5. Gleitpaarung nach den Ansprüchen 1 und 4,
**dadurch gekennzeichnet,**
**dass** das zweite Gleitelement eine Zwischenschicht aufweist, welche zum Anlagern der Schicht, welche die Gleitfläche bildet, dient.

6. Gleitpaarung nach Anspruch 5,
**dadurch gekennzeichnet,**
**dass** die Zwischenschicht aus Zirkoniumoxid oder Aluminiumoxid besteht.

7. Gleitpaarung nach Anspruch 4,
**dadurch gekennzeichnet,**
**dass** das zweite Gleitelement aus Aluminiumoxid mit mindestens 80 % Al₂O₃ oder einer Mischung von Aluminiumoxid mit Zirkondioxid besteht.

8. Gleitpaarung nach einem oder mehreren der vorherigen Ansprüche,
**dadurch gekennzeichnet,**
**dass** das erste Gleitelement aus Kohlenstoff solcher der Gruppen Mesophasen aus erdöl- oder kohlestämmigen Pechen, Kohlegraphite, Hartbrandkohlen, Elektrographite, Halbkoks- oder Mesophasenpulver mit selbstsinternden Eigenschaften oder Kunstkohle besteht.

9. Gleitpaarung nach Anspruch 1 und den Ansprüchen 4 bis 7,
**dadurch gekennzeichnet,**
**dass** das zweite Gleitelemente monolithisch hergestellt ist und seine Beschichtung bzw. Beschichtungen nach den Verfahren des thermischen Spritzens oder dem physikalischen Abscheiden aus der Dampfphase hergestellt sind.

10. Gleitpaarung nach einem oder mehreren der vorherigen Ansprüche,
**dadurch gekennzeichnet,**
**dass** das erste Gleitelement aus Kohlenstoff eine unter der Gleitfläche liegende Zwischenschicht aus Zirkoniumoxid oder Aluminiumoxid aufweist.

11. Gleitpaarung nach einem oder mehreren der vorherigen Ansprüche,
**dadurch gekennzeichnet,**
**dass** die Oberflächen des zweiten Gleitelementes Krümmungsradien der Mikrokontakte in der Große von 5µm< R< 10µm aufweisen.

12. Gleitpaarung nach einem oder mehreren der vorherigen Ansprüche,
**dadurch gekennzeichnet,**
**dass** die Oberflächen des zweiten Gleitelementes mit Zirkonhydroxid beschichtet ist, wobei diese Beschichtung eine Schichtdicke bis 1000nm, vorzugsweise jedoch zwischen 10nm< d <50nm, aufweist.

13. Gleitpaarung nach einem oder mehreren der vorherigen Ansprüche,
**dadurch gekennzeichnet,**
**dass** die Oberflächen bzw. der Werkstoff des ersten Gleitelementes mit bis zu 30 Gew.-% Zirkonhydroxid imprägniert ist.

## Claims

1. A pair of sliding elements having one carbon-based sliding element and a further second sliding element which has thermal expansion behavior similar to carbon but has a different material composition, **characterized in that** the second sliding element has a sliding surface of a material which, on engagement, prevents the formation of a transfer layer based on carbon.

2. A pair of sliding elements as claimed in claim 1, **characterized in that** the second sliding element comprises predominantly zirconium dioxide in the monoclinic, tetragonal or cubic crystallographic phase.

3. A pair of sliding elements as claimed in claim 1 or 2, **characterized in that** the second sliding element comprising predominantly zirconium dioxide contains up to 20% by weight of MgO and/or 13 - 16% by weight of CeO₂.

4. A pair of sliding elements as claimed in claim 1, **characterized in that** the second sliding element has a sliding surface which comprises a layer of a mixture selected from the material system antimony-antimony oxide-zirconium hydroxide and engages with the carbon-based sliding element.

5. A pair of sliding elements as claimed in any of claims 1 to 4, **characterized in that** the second sliding element has an intermediate layer which serves to bond the layer which forms the sliding surface.

6. A pair of sliding elements as claimed in claim 5, **characterized in that** the intermediate layer comprises zirconium oxide or aluminum oxide.

7. A pair of sliding elements as claimed in claim 4, **characterized in that** the second sliding element comprises aluminum oxide having an Al₂O₃ content of at least 80% or a mixture of aluminum oxide with zirconium dioxide.

8. A pair of sliding elements as claimed in one or more of the preceding claims, **characterized in that** the first sliding element comprising carbon comprises carbon selected from the group consisting of mesophases comprising pitches derived from petroleum or coal, graphitized carbon, hard charcoals, electrographites, semicoke and mesophase powders having self-sintering properties and synthetic carbons.

9. A pair of sliding elements as claimed in claim 1 and any of claims 4 to 7, **characterized in that** the second sliding element is produced as a monolith and its coating or coatings are produced by thermal spraying or physical vapor deposition.

10. A pair of sliding elements as claimed in one or more of the preceding claims, **characterized in that** the first sliding element comprising carbon has an intermediate layer of zirconium oxide or aluminum oxide located under the sliding surface.

11. A pair of sliding elements as claimed in one or more of the preceding claims, **characterized in that** the surfaces of the second sliding element have radii of curvature of the microcontacts in the order of 5 µm < R < 10 µm.

12. A pair of sliding elements as claimed in one or more of the preceding claims, **characterized in that** the surface of the second sliding element is coated with zirconium hydroxide in a thickness of up to 1000 nm, but preferably in the range 10 nm < d < 50 nm.

13. A pair of sliding elements as claimed in one or more of the preceding claims, **characterized in that** the surfaces or the material of the first sliding element are/is impregnated with up to 30% by weight of zirconium hydroxide.

## Revendications

1. Appariement de surfaces de glissement doté d'un élément de glissement fabriqué à base de carbone et d'un deuxième élément de glissement, différent, dont le comportement à la dilatation thermique est similaire à celui du carbone mais qui présente cependant une autre composition matérielle,
**caractérisé en ce que** le deuxième élément de glissement présente une surface de glissement en un matériau qui, lors du contact, inhibe l'apparition d'une couche de transfert à base de carbone.

2. Appariement de surfaces de glissement selon la revendication 1, **caractérisé en ce que** le deuxième élément de glissement est constitué principalement de dioxyde de zirconium dans la phase cristallographique monocline, tétragonale et cubique.

3. Appariement de surfaces de glissement selon les revendications 1 et 2, **caractérisé en ce que** le deuxième élément de glissement constitué principalement de dioxyde de zirconium est allié avec jusque 20 % en poids de MgO et/ou avec 13 à 16 % en poids de CeO₂.

4. Appariement de surfaces de glissement selon la revendication 1, **caractérisé en ce que** le deuxième élément de glissement présente une surface de glissement qui est constituée d'une couche constituée d'un mélange du système de matériaux antimoine-oxyde d'antimoine-hydroxyde de zirconium et qui s'engage sur l'élément de glissement fabriqué à base de carbone.

5. Appariement de surfaces de glissement selon les revendications 1 et 4, **caractérisé en ce que** le deuxième élément de glissement présente une deuxième couche intermédiaire qui sert au dépôt de la couche qui forme la surface de glissement.

6. Appariement de surfaces de glissement selon la revendication 5, **caractérisé en ce que** la couche intermédiaire est constituée d'oxyde de zirconium ou d'oxyde d'aluminium.

7. Appariement de surfaces de glissement selon la revendication 4, **caractérisé en ce que** le deuxième élément de glissement est constitué d'oxyde d'aluminium avec au moins 80 % d'Al₂O₃ ou d'un mélange d'oxyde d'aluminium et de dioxyde de zirconium.

8. Appariement de surfaces de glissement selon l'une ou plusieurs des revendications précédentes, **caractérisé en ce que** le premier élément de glissement en carbone est constitué de carbone du groupe des mésophases de brai de pétrole ou de charbon, de graphites de charbon, de charbons recouverts, d'électrographites, de poudres de demi-coke ou de mésophases à propriétés d'autofrittage ou de charbons de synthèse.

9. Appariement de surfaces de glissement selon la revendication 1 et les revendications 4 à 7, **caractérisé en ce que** le deuxième élément de glissement est monolithique et **en ce que** son ou ses revêtements sont réalisés par les procédés de pulvérisation thermique ou de dépôt physique à partir de la phase vapeur.

10. Appariement de surfaces de glissement selon l'une ou plusieurs des revendications précédentes, **caractérisé en ce que** le premier élément de glissement en carbone présente une couche intermédiaire d'oxyde de zirconium ou d'oxyde d'aluminium située en dessous de la surface de glissement.

11. Appariement de surfaces de glissement selon l'une ou plusieurs des revendications précédentes, **caractérisé en ce que** les surfaces du premier élément de glissement présentent des rayons de courbure des microcontacts de l'ordre de 5 µm < R < 10 µm.

12. Appariement de surfaces de glissement selon l'une ou plusieurs des revendications précédentes, **caractérisé en ce que** la surface du deuxième élément de surface est recouverte d'hydroxyde de zirconium, ce revêtement présentant une épaisseur de couche qui peut atteindre 1 000 nm mais qui de préférence est comprise entre 10 nm < d < 50 nm.

13. Appariement de surfaces de glissement selon l'une ou plusieurs des revendications précédentes, **caractérisé en ce que** la surface ou le matériau du premier élément de glissement est imprégnée de jusque 30 % en poids d'hydroxyde de zirconium.
